# EUROPÄISCHE PATENTANMELDUNG

(11) **EP 0 890 475 A2**
(43) Veröffentlichungstag der Anmeldung: **13.01.1999**
(21) Anmeldenummer: 98110612.3
(22) Anmeldetag: 10.06.1998
(51) Int. Cl.: B60P 3/22

(54) **Verfahren zum Transportieren von Polyolefin-Schaumpartikeln**

(30) Priorität: 08.07.1997 DE 19729123
(71) Anmelder: BASF AKTIENGESELLSCHAFT, 67056 Ludwigshafen (DE)
(72) Erfinder: Fink, Günter, 67133 Maxdorf (DE); Kögel, Wolfram, 68309 Mannheim (DE); Hohl, Friedrich, 67125 Dannstadt-Schauernheim (DE)

(57) **Zusammenfassung**

Die Erfindung betrifft ein Verfahren zum Transportieren von Polyolefin-Schaumpartikeln in einem Transportbehälter, der am Boden oder im Bodenbereich der Rückwand eine Absaugvorrichtung aufweist, durch die nach dem Transport die Schaumpartikel abgeführt werden können.

## Beschreibung

Die Erfindung betrifft ein Verfahren zum Transportieren von Polyolefin-Schaumpartikeln in einem Transportbehälter.

Polyolefin-Schaumpartikel werden vom Produzenten zum Verarbeiter gewöhnlich in Säcken, Kartons oder sogenannten Inletts befördert. Inletts haben ein Volumen von 40 bis 80 m³ und bestehen aus luftdurchlässigem Gewebe. Die bisherigen Versandarten erfordern beim Verarbeiter einen großen Aufwand beim Entladen der LKWs. Auch bei den lose in Inletts transportierten Partikeln muß ein Mitarbeiter beim Entladen mit einem Absaugschlauch in das Fahrzeug. Dies bindet den Mitarbeiter beim Entladevorgang je nach Produkttyp und Gebläse für 100 m³ zwischen 2 bis 5 Stunden.

Es wurde nun gefunden, daß diese Nachteile vermieden werden können, wenn der Transportbehälter an seinem Boden eine Absaugvorrichtung aufweist.

Gegenstand der Erfindung ist demzufolge ein Verfahren zum Transportieren von Polyolefin-Schaumpartikeln mit einem Schüttgewicht von 5 bis 200 g·l⁻¹ und einer mittleren Teilchengröße von 1 bis 15 mm in einem Transportbehälter mit einem Volumen von 20 bis 150 m³, wobei der Transportbehälter am Boden oder im Bodenbereich der Rückwand eine Absaugvorrichtung aufweist, durch die die Schaumpartikel nach dem Transport aus dem Behälter abgeführt werden können.

Als Polyolefin-Schaumpartikel kommen die bekannten Partikelschaumstoffe auf Basis von Polyethylen und Polypropylen in Frage. Polyethylen-Schaumpartikel sind unvernetzt oder vernetzt, ihre Partikelgröße beträgt insbesondere 3 bis 12 mm.

Polypropylen-Schaumpartikel weisen vorzugsweise eine mittlere Partikelgröße von 2 bis 8 mm auf, ihre Schüttdichte beträgt insbesondere 10 bis 100 g·l⁻¹. Bevorzugt ist als Polymerbasis ein Copolymeres der Propylen mit 1 bis 8 Gew.-% Ethylen und/oder Buten-1.

Als Transportbehälter kommen die üblichen Lastkraftwagen, Anhänger, Container und Wechselbrücken in Frage. LKWs und deren Anhänger können die üblichen Aufbauten aus Holz, Metall oder Kunststoff haben, wobei diese auch gekippt oder hochgestellt werden können. Das Volumen der Transportbehälter beträgt 20 bis 150 m³, vorzugsweise 40 bis 120 m³.

Diese müssen eine Befüllöffnung besitzen, durch die sie mittels Gebläse oder drucklos befüllt werden können. Vorteilhaft ist eine zusätzliche Öffnung zum Entweichen der Luft. Die Entleerung der Behältnisse erfolgt durch Absaugen mittels eines Gebläses, das sich im Transportbehältnis befinden kann oder außerhalb. Grundsätzlich kann die Absaugvorrichtung auch aus einem Injektor bestehen, durch den Luft in das Absaugrohr eingeblasen wird.

Die Erfindung kann in mehreren Ausführungsformen realisiert werden:

Bei einer besonders bevorzugten Ausführungsform weist der Transportbehälter einen doppelten Boden auf, dessen obere Fläche (d.h., der eigentliche Boden des Behälters) Löcher aufweist und dessen untere Fläche mit der Absaugvorrichtung verbunden ist. Der Durchmesser der Löcher ist vorzugsweise unterschiedlich groß; wenn z.B. das Gebläse an der Vorderseite des doppelten Bodens angebracht ist, dann sollten hinten die Löcher größer sein als vorne (z.B. 25 mm bzw. 12 mm), damit die Schaumpartikel von hinten nach vorne abgesaugt werden.

Bei einer zweiten Ausführungsform sind am Boden des Transportbehälters gelochte Rohre, z.B. mit einem Durchmesser von 5 bis 20 cm angebracht, die mit der Absaugvorrichtung verbunden sind. Die Schaumpartikel werden durch die Löcher in die Rohre hinein und von dort über das Gebläse abgesaugt.

Bei einer dritten Ausführungsform weist der Boden des Behälters eine oder mehrere trichterförmig nach unten verlaufende Auslaufeinrichtungen auf, die mit der Absaugvorrichtung verbunden sind. Bei mehreren Trichtern kann es vorteilhaft sein, wenn diese separat verschließbar sind, so daß die einzelnen Trichter nacheinander entleert werden können.

Bei einer vierten Ausführungsform der Erfindung ist der Boden des Transportbehälters ein Förderband und die Absaugvorrichtung ist mit Öffnungen im Bodenbereich der Rückwand verbunden. Bei der Entleerung werden die Schaumpartikel in den hinteren Bereich des Behälters befördert. Dort sind verschließbare Öffnungen, z.B. Klappen angebracht, durch die die Schaumpartikel abgesaugt werden. Die Absaugung kann auch über einen Trichter erfolgen.

Bei einer fünften Ausführungsform hat der Transportbehälter eine bewegliche Vorder- oder Rückwand und die Absaugvorrichtung ist mit Öffnungen im Bodenbereich der Rückwand verbunden. Die bewegliche Wand kann z. B. mittels Gleitrollen in das Innere des Behälters hinein verschoben werden, wobei die Abdichtung durch Gummilippen oder Besen gewährleistet wird. Gleichzeitig mit dem Verschieben der Wand werden die Schaumpartikel durch Öffnungen im Bodenbereich der Rückwand über Rohre oder Trichter abgesaugt.

Durch das erfindungsgemäße Verfahren wird es möglich, den Transportbehälter schnell, vollständig und unter Einsparung von Personal automatisch zu entleeren. Außerdem kann der Transportbehälter auch als Lagersilo genutzt werden.

## Patentansprüche

1. Verfahren zum Transportieren von Polyolefin-Schaumpartikeln mit einem Schüttgewicht von 5 bis 200 g⁻l⁻¹ und einer mittleren Teilchengröße von 1 bis 15 mm in einem Transportbehälter mit einem Volumen von 20 bis 150 m³, dadurch gekennzeichnet, daß der Transportbehälter am Boden oder im Bodenbereich der Rückwand eine Absaugvorrichtung aufweist, durch die die Schaumpartikel nach dem Transport aus dem Behälter abgeführt werden können.

2. Verfahren nach Anspruch 1, dadurch gekennzeichnet, daß der Transportbehälter ein LKW, ein LKW-Anhänger, ein Container oder eine Wechselbrücke ist.

3. Verfahren nach Anspruch 1, dadurch gekennzeichnet, daß die Absaugvorrichtung ein Gebläse ist oder ein Injektor, durch den Luft eingeblasen wird.

4. Verfahren nach Anspruch 1, dadurch gekennzeichnet, daß der Transportbehälter einen doppelten Boden aufweist, dessen obere Fläche Löcher aufweist und dessen untere Fläche mit der Absaugvorrichtung verbunden ist.

5. Verfahren nach Anspruch 1, dadurch gekennzeichnet, daß der Transportbehälter am Boden mehrere gelochte Röhren aufweist, die mit der Absaugvorrichtung verbunden sind.

6. Verfahren nach Anspruch 1, dadurch gekennzeichnet, daß der Transportbehälter ein oder mehrere trichterförmige Auslaufeinrichtungen aufweist, die mit der Absaugvorrichtung verbunden sind.

7. Verfahren nach Anspruch 1, dadurch gekennzeichnet, daß der Transportbehälter ein Förderband als Boden hat und die Absaugvorrichtung mit Öffnungen im Bodenbereich der Rückwand verbunden ist.

8. Verfahren nach Anspruch 1, dadurch gekennzeichnet daß der Transport-Behälter eine bewegliche Vorder- oder Rückwand hat und die Absaugvorrichtung mit Öffnungen im Bodenbereich der Rückwand verbunden ist.
